# NOUVEAU FASCICULE DE BREVET EUROPEEN

(11) **EP 0 713 650 B2**
(45) Date de publication et mention de la décision concernant l'opposition: **08.01.2003**
(45) Mention de la délivrance du brevet: 24.03.1999
(21) Numéro de dépôt: 95203066.6
(22) Date de dépôt: 10.11.1995
(51) Int. Cl.: A23G 9/20

(54) **Procédé et dispositif de fabrication de produits congelés aérés**
Verfahren und Vorrichtung zur Herstellung von lufthaltigen gefrorenen Produkten
Process and apparatus for producing aerated frozen products

(30) Priorité: 23.11.1994 EP 94118379
(43) Date de publication de la demande: 29.05.1996
(73) Titulaire: SOCIETE DES PRODUITS NESTLE S.A., 1800 Vevey (CH)
(72) Inventeur: Fayard, Gilles, CH-1052 Le Mont S/Lausanne (CH); Groux, Michel John Arthur, CH-3438 Lauperswil (CH)
(74) Mandataire: Archambault, Jean

(56) Documents cités:
- EP-A- 0 401 512
- EP-A- 0 561 118
- WO-A-88/01473
- WO-A-90/12571
- AT-B- 317 935
- DE-A- 2 538 858
- US-A- 5 215 777
- H. Mulder "The Mild Fat Globule", Centre for Agricultural Publishing and Documentation, Wageningen, the Netherlands, 1974, pp. 101-117
- Ice Cream Field, January 1961, E. Valaer et al, pp. 10, 30, 32, 36, 38
- Dairy Industries, August 1972, K. Berger et al., pp. 419-424
- Journal of Food Science, 1965, P. Sherman, pp. 201-211
- Part. Part. Syst. Charact., vol. 7, 1990, pp. 233-241
- Nippon Shokuhin Kogyo Gakkaishi, vol. 41, no. 5, pp. 347-354, 1994
- W. Arbuckle "Ice Cream" 2nd Edition, 1972, Avi Publishing Company, Westport
- J. Dairy, Sci, vol. 74, 1991, pp. 3334-3344

## Description

L'invention a trait à un procédé de fabrication de produits congelés aérés et à un dispositif pour la mise en oeuvre du procédé.

Un procédé classique de fabrication de produits congelés aérés, notamment de crème glacée, comprend les opérations de mélange, d'homogénéisation, de pasteurisation, de congélation et de durcissement du mélange à glacer. L'aération du mélange ou foisonnement s'effectue lors de l'étape de congélation dans une proportion telle que le volume augmente de 70 à 120 %. A la sortie du dispositif de congélation (freezer), la température de la masse aérée est typiquement - 5 à -6° C. Celle-ci est ensuite durcie à -40 à -45° C dans une chambre de durcissement, jusqu'à ce que la température du produit atteigne -18° C ou moins à coeur pour les produits en vrac ou -30° C pour les produits en barre extrudés.

On a cherché à abaisser la température de la masse à la sortie du dispositif de congélation (freezer), pour des raisons d'économie d'énergie et dans le but d'en améliorer la texture, par exemple dans le sens d'une plus grande onctuosité. On s'est cependant heurté avec les équipements classiques à des problèmes insurmontables de viscosité élevée de la masse de crème glacée à température en dessous de -7 à -8° C. Ces problèmes ont été en partie résolus en mettant en oeuvre deux freezers à surface raclée en série, le premier, classique, délivrant la crème glacée aérée à environ -7° C et le second, spécialement conçu pour traiter la masse hautement visqueuse de manière à abaisser sa température jusqu'à environ -10° C.

Dans le même ordre d'idées, EP-A-0561118 décrit un procédé en trois étapes pour produire de la crème glacée à température basse, jusqu'à environ -20° C. C'est une température de sortie où l'étape de durcissement peut être entièrement éliminée pour les produits en vrac et notablement raccourcie pour les produits extrudés. Dans la première étape, dite de préfoisonnement, on incorpore de l'air au mélange à glacer à température positive. Dans la seconde, on refroidit la masse aérée dans un échangeur à suface raclée, qui sort à environ -6° C. Au cours de la troisième, un dispositif à vis refroidit la masse à environ -20° C.

US-A-5024066 concerne un système à deux étages. Dans le premier a lieu un préfoisonnement au cours duquel on ajoute de l'air à la masse à glacer à température positive. Dans le second, on refroidit la masse aérée au moyen d'une vis d'archimède à surface rugueuse munie de couteaux racleurs à sa périphérie jusqu'à une température négative suffisamment basse pour assurer une texture stable de la masse congelée, ce qui permet d'entreposer directement les produits en chambre froide.

Le but de la présente invention est de réaliser les opérations de foisonnement et de refroidissement de la masse en une seule étape dans un appareil unique, plus facile à maitriser et de moindre encombrement que les dispositifs connus et ainsi de simplifier le procédé de congélation à basse température tout en tirant parti des avantages énergétique et de texture mentionnés précédemment.

L'invention concerne un procédé de fabrication de produits congelés aérés, dans lequel on mélange, on aère, on congèle, on refroidit une composition à glacer jusqu'à une température égale ou inférieure à -8° C et on la fait passer à travers une filière, caractérisé par le fait que ces opérations ont lieu en une seule étape dans un dispositif unique constitué de deux vis sans fin, parallèles, tournant dans le même sens en s'engrenant l'une dans l'autre et situées dans un fourreau muni de moyens d'aération et de refroidissement.

On a constaté avec surprise qu'il est possible d'aérer, de mélanger, de refroidir et d'extruder une composition à glacer en une seule étape tout en obtenant un produit aéré congelé à basse température de texture améliorée et stable alors qu'on aurait pu craindre que la texture de la composition glacée ne soit endommagée lors du traitement dans un dispositif bi-vis. Celà ne va pas de soi, puisque les procédés connus prévoient que l'aération ait lieu préalablement au refroidissement dans un dispositif séparé et que le refroidissement conduisant à la congélation s'effectue au moins partiellement dans un dispositif muni de couteaux racleurs.

Pour mettre en oeuvre le procédé, on prépare de manière conventionnelle une composition pour crème glacée, crème glacée allégée en matière grasse ou sorbet à base, selon la recette, de lait, lait écrémé, crème, lait concentré, poudre de lait, huile de beurre à laquelle on ajoute du saccharose, glucose, dextrose de fruits, pulpe de fruits et des hydrocolloides stabilisants comme, par exemple, les carraghénates, alginates, la gomme de caroube, des émulsifiants comme, par exemple, les glycérides partiels et des arômes. Après mélange intime des ingrédients dans les proportions dictées par la recette, on pasteurise, refroidit, puis, le cas échéant on peut homogénéiser, de préférence à chaud dans des conditions poussées permettant une réduction de la taille moyenne des globules gras autour de 8-20 micron. Après refroidissement de l'homogénéisat à basse température, proche de 0° C, on peut laisser la composition mûrir un certain temps à cette température. L'homogénéisation et la maturation sont des étapes optionnelles.

Cette masse, le cas échéant homogénéisée et mûrie est désignée dans la suite de l'exposé par "masse à glacer". Elle est introduite, de préférence à environ 2-5° C dans un dispositif de congélation bi-vis qui sera décrit ci-après plus en détails, dans lequel elle est malaxée par les vis co-rotatives tournant à vitesse élevée, préférablement à 100-600 tour/min, acheminée vers une zône d'injection d'air où elle est foisonnée à 20-150 %, fortement refroidie, jusqu'à-8 à -20° C, puis forcée à travers une filière.

Le travail dans le dispositif bi-vis s'effectue de manière surprenante sans cisaillement excessif, de sorte que la montée en pression n'excède pas environ 50 bar au niveau de la filière. Le produit sortant est caractérisé par un diamètre moyen des cristaux de glace notablement plus bas que ce que l'on peut obtenir avec les freezers conventionnels. Il en résulte une texture améliorée dans le sens d'une meilleure onctuosité et d'une meilleure crémosité.

L'invention concerne également un dispositif pour la mise en oeuvre du procédé précédent, comprenant deux vis sans fin, identiques et parallèles s'engrenant l'une dans l'autre et tournant dans le même sens, placées dans un fourreau muni à l'une de ses extrémités d'une filière d'extrusion et à l'autre de moyens d'alimentation en composition à glacer et, dans une zone intermédiaire, de moyens d'alimentation en air, le fourreau étant pourvu d'un manchon où circulent des fluides frigorigènes.

Les deux vis sans fin peuvent présenter des segments successifs où la forme des vis varie d'un segment à l'autre, par exemple du point de vue de l'orientation des filets et de leur pas. La configuration des vis est disposée pour effectuer les opérations de transport, mélange, cisaillement et compression de la masse vers la filière et pour favoriser l'incorporation de gaz de manière à obtenir un bon foisonnement. On peut prévoir des zones intermédiaires de brassage, par exemple par des disques monolobes ou bilobes à orientation positive, ayant un effet de transport ou négative, ayant un effet de retour ou encore un segment à pas de vis inverse induisant un retour.

Le fourreau est muni de moyens de refroidissement constitués d'une double enveloppe avec, préférablement, un circuit de refroidissement autonome par segment, avec soupapes de contrôle du débit d'agent frigorigène ce qui permet une régulation individuelle de chaque segment en température.

L'air peut être injecté au moyen de débimètres par des conduits à différents niveaux du fourreau, et de préférence dans la seconde moitié de sa longueur, préférablement de chaque côté de celui-ci. On peut atteindre ainsi, de préférence, 80 à 150 % de foisonnement.

La filière est, de préférence, en forme d'un contre-cône, dont le rôle est de réunir les espaces entourant chaque vis en un seul orifice de sortie. Elle peut être à sortie horizontale ou verticale. La géométrie et le dimensionnement de la filière ou, le cas échéant, le diamètre et la longueur du conduit de sortie qui peut lui être associé sont prévus pour assurer une contre-pression de l'ordre de 4 à 50 bar et, de préférence de 4 à 25 bar. On peut régler la contre-pression au moyen, par exemple, d'une soupape à bille en aval du conduit en question, par exemple dans le cas d'une température de sortie du produit proche de la limite basse, auquel cas le diamètre du conduit de sortie doit être augmenté pour compenser la chute de pression due à la perte de charge provoquée par l'augmentation de la viscosité lorsque la température de la masse baisse. La filière peut, de préférence, être refroidie, par exemple au moyen d'un manchon où circule un fluide de refroidissement.

Le dispositif selon l'invention est décrit plus en détails ci-après en référence au dessin annexé, donné à titre d'exemple et dans lequel:
La figure 1 est une vue schématique en perspective éclatée du dispositif et
La figure 2 est une coupe tranversale schématique du fourreau selon AA de la figure 1.

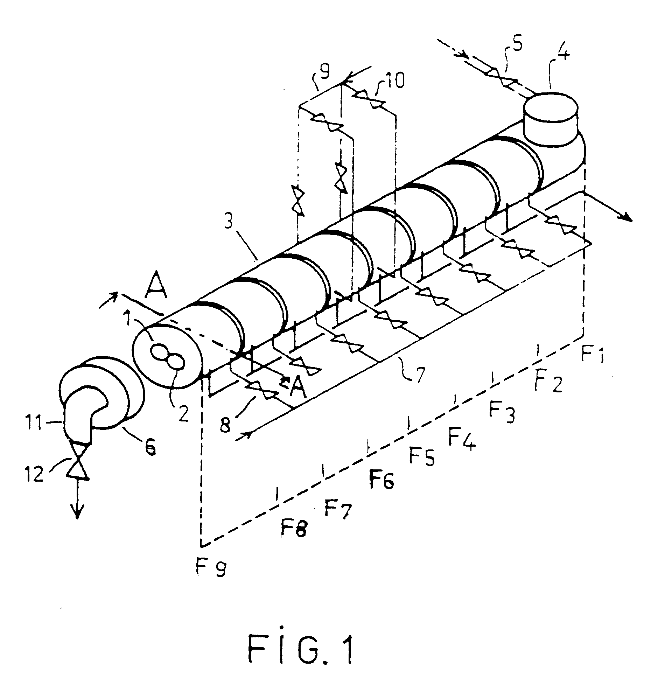

Comme on le voit à la figure 1, le dispositif comprend deux vis d'extrusion 1 et 2, identiques et parallèles, mobiles en rotation autour de leur axe et tournant dans le même sens, entraînées par un moteur non représenté. Les vis 1 et 2 sont montées dans un fourreau 3, qui présente à son début un conduit 4 d'alimentation en composition à glacer pourvu d'une soupape de non retour 5 pour assurer l'étanchéité vis à vis de l'air et qui se termine par une filière 6 sous forme de plaque.

Le fourreau comprend neuf segments F1 à F9 de 100 mm de longueur, modulables du point de vue de la configuration de vis, auxquels sont associés dés circuits de refroidissement 7 individuels par manchons correspondants parcourus par un mélange eau-alcool, avec réglage individuel du débit au moyen des vannes 8. L'aération a lieu par les arrivées d'air 9, de chaque côté du fourreau et l'air est injecté par piston muni d'un débimètre massique. Le débit d'air est réglé individuellement par des vannes 10.

Dans une variante non représentée, la filière 6 est pourvue d'un manchon où circule également un fluide de refroidissement dont le débit peut être réglé individuellement.

A l'extrémité de sortie du fourreau 3 et de la filière 6, un conduit 11 sert de zone de pré-expansion. Le conduit 11 est pourvu d'une soupape à bille 12 pour contrôler la contre-pression et la durée de séjour de la masse dans le fourreau.

Soit L la longueur totale des segments de l'une des vis 1 et 2, qui représente la longueur active de ces vis, et D le diamètre de l'une des vis 1 et 2, le rapport UD est de l'ordre de 30 à 60.

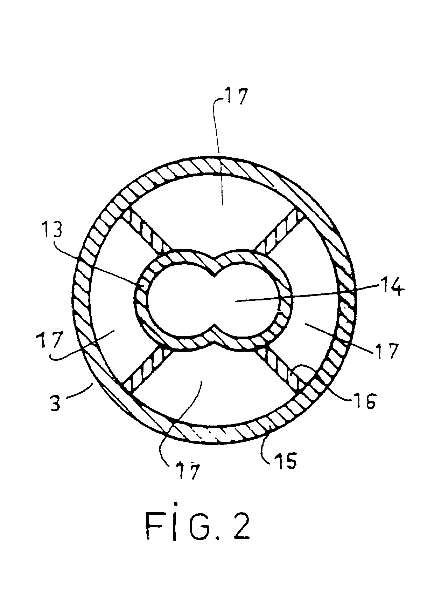

A la figure 2, on voit que le fourreau 3 comporte une enveloppe métallique intérieure 13 entourant le canal 14 de passage des vis 1 et 2 (non représentées) et une enveloppe métallique extérieure 15 maintenue à distance de l'enveloppe 13 par des entretoises 16. Un fluide de refroidissement circule dans le canal 17 entre les parois constituées par les enveloppes 13 et 15.

Le procédé selon l'invention est décrit plus en détails dans les exemples ci-après donnés à titre d'illustration. Les pourcentages y sont en poids.

### Exemple 1

On a préparé une composition à glacer de bas point de congélation contenant 8,5 % de graisse lactique (sous forme de crème à 35 % de matière grasse), 11 % de solides non gras du lait, 12 % de sucrose, 6,4 % de sirop de glucose (d'équivalent dextrose 40), 1 % de dextrose, 0,47 % de glycérides partiels à titre de stabilisants/émulsifiants et 0,4 % d'arôme de vanille. La teneur en solides totaux de la composition était 39,15 %, le solde étant représenté par l'eau. Le mélange a subi une homogénéisation en deux étages à 135, puis 35 bar, a été pasteurisé à 86° C pendant 30 s, refroidi à 4° C et entreposé 24 h à cette température. Cette composition a été introduite dans le dispositif dans les conditions opératoires indiquées ci-après:
- Configuration des vis 1 et 2

| | | | | | | | |
|---|---|---|---|---|---|---|---|
| Segments | F1 | F2 | F3 | F4 | F5 | F6-F7 | F8-F9 |
| Type de vis | T | T | T | M/C | T | CO | CO |
| Avec T: Transport, M: Mélange, C: Cisaillement et CO: Compression | | | | | | | |

- Injection d'air: en 9 d'un seul côté dans F5
- Débit/température de la composition à glacer: 11 kg/h en F1/10° C
- Température d'entrée du fluide frigorigène: -17° C
- Vitesse de rotation des vis: 600 t/min
- Diamètre de la filière (sans conduit ni soupape de sortie): 1, 2 mm,
- Température dans les segments de fourreau et la plaque de filière:

| | | | | |
|---|---|---|---|---|
| Segments | F1-F2 | F3 | F4-F9 | Plaque 6 |
| Température (° C) | +3 à +5 | -8,5 | -10 à -11 | -9 |

La température de la masse à la sortie de la filière 6 était-10,5° C.
Le foisonnement était de 65 % (augmentation de volume par rapport à la masse non aérée).

Le produit obtenu avait une texture plus onctueuse et plus crémeuse que les produits fabriqués de manière conventionnelle.

### Exemple 2

Dans cet exemple, la composition à glacer était la même que celle de l'exemple 1 et les conditions opératoires étaient les suivantes:
- Configuration des vis 1 et 2

| | | | | | | | |
|---|---|---|---|---|---|---|---|
| Segments | F1 | F2 | F3 | F4 | F5 | F6-F7 | F8-F9 |
| Type de vis | T | T/M | T/M | M/C | T | CO | CO |
| Avec T: Transport, M: Mélange, C: Cisaillement et CO: Compression | | | | | | | |

- Injection d'air: en 9 des deux côtés dans F5 et F6, soit par 4 conduits avec un débit de 7,8 l/h
- Débit/température de la composition à glacer: 10 kg/h en F2/10° C
- Température d'entrée du fluide frigorigène: -25 à -28° C
- Vitesse de rotation des vis: 600 t/min
- Diamètre de la filière, avec conduit 11 et soupape de sortie 12: 10 mm
- Température dans les segments de fourreau et la plaque de filière:

| | | | | |
|---|---|---|---|---|
| Segments | F1-F2 | F3 | F4-F9 | Plaque 6 |
| Température (° C) | +8 à +12 | -8 à 9 | -10 à 14 | -12 |

La température de la masse à la sortie de la filière 6 était -8 à -10° C.
Le foisonnement était de 80 à 100 %.

Le produit obtenu avait une texture plus onctueuse et plus crémeuse que les produits fabriqués de manière conventionnelle.

### Exemples 3-6

On a procédé avec la même composition à glacer que dans l'exemple 1, la configuration de vis et dans les mêmes conditions qu'à l'exemple 2, mis à part:
- Le débit de composition à glacer: 9,5 kg/h,
- La température dans le segment F2: 4,5 à 5,5° C,
- La température du fluide frigorigène à l'entrée du circuit de refroidissement du fourreau: -26,5 à -27,5° C.

Comme autre différence, on a varié la vitesse de rotation des vis, comme indiqué ci-après. Les paramètres suivants ont été relevés pour les produits sortants:

| Exemple | 3 | 4 | 5 | 6 |
|---|---|---|---|---|
| Vitesse (t/min) | 600 | 300 | 200 | 100 |
| Température de sortie (° C) | -8,5 | -10 | -11 | -12,2 |
| Foisonnement (%) | 90 | 90 | 85 | 80 |
| Pression à la plaque 6 (bar) | 2 | 7 | 11 | 23 |

Dans tous les cas, les produits obtenus avaient une texture plus onctueuse et plus crémeuse que les produits fabriqués de manière conventionnelle.

### Exemples 7-8

On a procédé avec la même composition à glacer que dans l'exemple 1, la configuration de vis et dans les mêmes conditions qu'à l'exemple 2, mis à part:
- Le débit de composition à glacer: 9,5 kg/h,
- La température dans le segment F2: 3° C,
- La température du fluide frigorigène à l'entrée du circuit de refroidissement du fourreau: -25,9 à -27,1° C,
- La vitesse de rotation des vis, soit 600 t/min dans l'exemple 7 et 100 t/min dans l'exemple 8,
- A la sortie de la filière, conduit 11 de 20 mm de diamètre ainsi qu'une soupape 12 à bille.

Dans le cas de l'exemple 7, la température de sortie du produit était - 8,4° C et le foisonnement 90 %.

Dans le cas de l'exemple 8, la température de sortie du produit était - 12,4° C et le foisonnement 80 % et la pression au niveau de la filière 9 bar.

Dans tous les cas, les produits obtenus avaient une texture plus onctueuse et plus crémeuse que les produits fabriqués de manière conventionnelle.

### Exemple 9

On a procédé dans les conditions de l'exemple 7, mis à part les caractéristiques suivantes:
- Configuration des vis 1 et 2

| | | | | | | | |
|---|---|---|---|---|---|---|---|
| Segments | F1 | F2 | F3 | F4 | F5 | F6-F7 | F8-F9 |
| Type de vis | T | T/M | T/M | M/C | M/C | CO | CO |
| Avec T: Transport, M: Mélange, C: Cisaillement et CO: Compression | | | | | | | |

- Injection d'air: en 9 des deux côtés dans F5 et F6, soit par 4 conduits avec un débit de 9,9 l/h.

La température de sortie du produit était -8,5° C et le foisonnement 100 %.

Le produit obtenu avait une texture plus onctueuse et plus crémeuse que les produits fabriqués de manière conventionnelle.

### Exemples 10-11

Dans ces exemples, où l'on a traité une composition à glacer préparée selon l'exemple 1, les conditions opératoires étaient les suivantes:
- Configuration des vis 1 et 2

| | | | | | | | | | |
|---|---|---|---|---|---|---|---|---|---|
| Segments | F1 | F2⁻ | F3 | F4 | F5 | F6 | F7 | F8 | F9 |
| Type de vis | T | T/M | T/M | M/C | T | CO | M/CO | M/CO | CO |
| Avec T: Transport, M: Mélange, C: Cisaillement et CO: Compression | | | | | | | | | |

- Pour l'exemple 10:
- Débit de produit entrant 10 kg/h.
- Injection d'air: en 9 des deux côtés dans F5 et F6, soit par 4 conduits avec un débit de 12 g/h.
- Vitesse de rotation des vis: 300 t/min.
- Refroidissement des zones F2 à F9 avec un liquide frigorigène à -30/-35° C. La température de sortie du produit était -11,5° C et le foisonnement 100 %.
- Pour l'exemple 11:
- Débit de produit entrant 10 kg/h.
- Injection d'air: en 9 des deux côtés dans F5 et F6, soit par 4 conduits avec un débit de 13 g/h.
- Vitesse de rotation des vis: 100 t/min.
- Refroidissement des zones F2 à F9 avec un liquide frigorigène à -30/-35° C.
La température de sortie du produit était -14,6° C et le foisonnement 90 %.

Les produits obtenus avaient une texture plus onctueuse et plus crémeuse que les produits fabriqués de manière conventionnelle à titre de référence. Le vieillissement accéléré était produit pendant 3 j. par chocs thermiques en étuve programmée avec un cycle de températures simulant les conditions auquelles les produits sont soumis lors de leur distribution dans la chaîne du froid jusqu'au consommateur.

Sachant que la déstabilisation de la matière grasse contribue au caractère gras d'une glace, on a noté que dans les glaces préparées selon l'invention, le taux de déstabilisation de la matière grasse est toujours plus important que dans le cas des produits conventionnels.

### Exemple 12

Dans cet exemple, on a traité une composition à glacer pauvre en matière grasse ou allégée, contenant 5 % de matière grasse. Pour la préparer, on a mélangé 14,28 % de crème à 35 % de matière grasse, 8 % de solides non gras du lait, 15 % de saccharose, 3,03 % de sirop de glucose (d'équivalent dextrose 40), 1 % de dextrose, 0,5 % de glycérides partiels à titre de stabilisants/émulsifiants et 0,4 % d'arôme de vanille. La teneur en solides totaux de la composition était 33,06 %, le solde étant représenté par l'eau. On a homogénéisé ensuite le mélange en deux étages à 224, puis 40 bar, puis on l'a pasteurisé à 86° C pendant 30 s, on l'a refoidi à 4° C et on l'a entreposé 24 h à cette température.

On a introduit cette composition à glacer dans le dispositif dans les mêmes conditions opératoires et de configuration des vis que celles de l'exemple 10. La température de la masse à la sortie de l'extrudeur était -11,5° C et le foisonnement 100 %.

La crème glacée à basse teneur en matière grasse avait une texture très crémeuse. Le produit fraîchement préparé ainsi que le produit ayant subi le vieillissement accéléré ont été comparés à des produits de référence ayant subi les mêmes contraintes. Les dégustateurs on trouvé que les produits fraîchement préparés selon l'invention procuraient une moindre sensation de froid, avaient une texture plus grasse et avaient moins de cristaux.

### Exemples 13-16

Dans ces exemples, on a préparé des compositions pour sorbet de la manière suivante: A un mélange à 60° C de 0,8 % de stabilisants (gélatine, gomme de caroube), on a ajouté 29 % de sucre, 10 % de sirop de glucose et 35 % de purée de framboise non sucrée, un colorant et un arôme framboise ainsi qu'un acide de qualité alimentaire jusqu'à pH 3,2-3,4. La teneur en solides de la composition était de 30,30 %, le solde étant représenté par l'eau. On a homogénéisé le mélange à 72° C en un étage avec une pression de 50 bar, puis on l'a pasteurisé à 85° C pendant 30 min., refroidi à 4° C et laissé au repos au moins 4 h à cette température.

On a introduit cette composition à glacer dans le dispositif avec la même configuration des vis que celle de l'exemple 10. Les conditions opératoires étaient les mêmes que dans l'exemple 10, mis à part les suivantes:
- Injection d'air: en 9 des deux côtés dans F5 et F6, soit par 4 conduits avec un débit de 2, 5, 12 et 15 g/h.
- Vitesse de rotation des vis: de 100 et 300 t/min.

Les paramètres suivants ont été relevés pour les produits sortants:

| Exemple | 13 | 14 | 15 | 16 |
|---|---|---|---|---|
| Débit d'air (g/h) | 2 | 5 | 12 | 15 |
| Vitesse (t/min) | 100 | 100 | 100 | 300 |
| Température de sortie (° C) | -16 | -16 | -16,5 | -10,5 |
| Foisonnement (%) | 24 | 40 | 92 | 150 |

Les produits obtenus avaient des textures rappelant celles des crèmes glacées malgré l'absence totale de matière grasse.

La dégustation comparative par rapport à un sorbet de même composition traité de manière conventionnelle a fait apparaître le caractère moins froid, la moindre perception de cristaux, la plus grande sensation de gras et la moindre rugosité des sorbets préparés selon l'invention tant pour les produits fraîchement préparés que pour ceux ayant subi le vieillissement.

### Exemples 17-19

Exemple 17: On a procédé comme à l'exemple 10 avec homogénéisation, mais en supprimant l'étape de maturation.

Exemple 18: On a procédé comme à l'exemple 10, mais en supprimant l'étape d'homogénéisation.

Exemple 19: On a procédé comme à l'exemple 10, mais en supprimant les étapes d'homogénéisation et de maturation.

Des essais de dégustation sur les produits fraîchement préparés ainsi que des mesures de structure (taille des cristaux, déstabilisation de la matière grasse) sur les produits fraîchement préparés et après vieillissement n'ont montré que de faibles différences par rapport aux mêmes produits ayant subi l'homogénéisation et la maturation.

Dans les exemples précédents, on a décrit le procédé et l'appareil en rapport avec la fabrication de composition glacée sans spécifier que l'on pourrait traiter en même temps plusieurs crèmes glacées ou sorbets de parfums et couleurs différents, par co-extrusion et obtenir ainsi des produits composites, par exemple marbrés, contenant le cas échéant des annexes.

Bien entendu, le procédé est applicable à la fabrication de produits congelés du genre des mousses, crèmes et pâtes à tartiner sucrées ou encore salées, par exemple de fromage, légume, viande ou poisson ou des sauces ou sauces à salade. Dans ces cas la flexibilité du procédé permet de moduler l'incorporation d'air dans la composition à glacer en fonction du degré de foisonnement plus ou moins grand souhaité en apport avec les caractéristiques des types de produits visés.

## Revendications

1. Procédé de fabrication de produits congelés aérés, dans lequel on mélange, on aére, on congèle, on refroidit une composition à glacer jusqu'à une température égale ou inférieure à -8° C et on la fait passer à travers une filière, **caractérisé par le fait que** ces opérations ont lieu en une seule étape dans un dispositif unique constitué de deux vis sans fin, parallèles, tournant dans le même sens en s'engrenant l'une dans l'autre et situées dans un fourreau muni de moyens d'aération et de refroidissement.

2. Procédé selon la revendication 1, **caractérisé par le fait que** l'on introduit la composition à glacer à environ 2-5° C dans le dispositif bi-vis, dans lequel elle est malaxée par les vis co-rotatives tournant à 100-600 tour/min, acheminée vers une zône d'injection d'air où elle est foisonnée à 20-150 %, fortement refroidie, jusqu'à -8 à -20° C, puis forcée à travers une filière.

3. Produit congelé aéré obtenu par la mise en oeuvre du procédé selon la revendication 1 ou 2.

4. Dispositif pour la mise en oeuvre du procédé selon l'une des revendications 1 et 2, comprenant deux vis sans fin, identiques et parallèles s'engrenant l'une dans l'autre et tournant dans le même sens, placées dans un fourreau muni à l'une de ses extrémités d'une filière et à l'autre de moyens d'alimentation en composition à glacer et, dans une zone intermédiaire, de moyens d'alimentation en air, le fourreau étant pourvu d'un manchon où circulent des fluides frigorigènes.

5. Dispositif selon la revendication 4, **caractérisé par le fait que** les deux vis sans fin présentent des segments successifs où la forme des vis varie d'un segment à l'autre, du point de vue de l'orientation des filets et de leur pas, la configuration des vis est disposée pour effectuer les opérations de transport, mélange, cisaillement et compression de la masse vers la filière et pour favoriser l'incorporation de gaz de manière à obtenir un bon foisonnement.

6. Dispositif selon la revendication 5, **caractérisé par le fait que**, L étant la longueur totale des segments d'une vis et D le diamètre d'une vis, le rapport L/D est de l'ordre d'environ 30-60 et que les vis comprennent des zones intermédiaires de brassage par disques monolobes ou bilobes à orientation positive, ayant un effet de transport ou négative, ayant un effet de retour ou encore segment à pas de vis inverse induisant un retour.

7. Dispositif selon la revendication 4, **caractérisé par le fait que** le fourreau est muni de moyens de refroidissement constitués d'une double enveloppe avec un circuit de refroidissement autonome par segment, que la filière est, le cas échéant, munie de moyens de refroidissement, avec soupapes de contrôle du débit d'agent frigorigène ce qui permet une régulation individuelle de chaque segment et, le cas échéant, de la filière en température.

8. Dispositif selon la revendication 4, **caractérisé par le fait que** l'air est injecté par des conduits à différents niveaux du fourreau de la 1/2 aux 4/5 de sa longeur, préférablement de chaque côté de celui-ci.

9. Dispositif selon la revendication 4, **caractérisé par le fait que** la filière est en forme d'un contre-cône, dont le rôle est de réunir les espaces entourant chaque vis en un seul conduit de sortie et que la sortie est verticale ou horizontale.

10. Dispositif selon la revendication 9, **caractérisé par le fait que** le diamètre et la longueur du conduit sont prévus pour assurer une contre-pression de 4 à 50 bar, et de préférence de 4 à 25 bar et qu'un dispositif en aval du conduit règle la contre-pression.

## Claims

1. Process for manufacturing aerated frozen products, wherein a composition to be frozen is mixed, aerated, frozen and cooled to a temperature equal to or less than -8°C and is passed through a die, **characterized in that** the operations occur in only one step in a single device consisting of two parallel endless screws revolving in the same direction while meshing with each other and situated in a barrel provided with means for aeration and cooling.

2. Process according to claim 1, **characterized in that** the composition to be frozen is introduced at approximately 2-5°C into the twin-screw device in which it is blended by the co-rotating screws revolving at 100-600 rpm, conveyed to an air injection zone where it is expanded by 20-150%, strongly cooled to -8 to -20°C, and then forced through a die.

3. Aerated frozen product obtained by implementing the process according to claim 1 or 2.

4. Device for implementing the process according to either of claims 1 or 2, comprising two identical parallel endless screws meshing with each other and revolving in the same direction, placed in a barrel provided at one of its ends with a die and at the other end with means for feeding it with the composition to be frozen and, in an intermediate zone, means for supplying air, the barrel being provided with a jacket through which cooling fluids circulate.

5. Device according to claim 4, **characterized in that** the two endless screws have successive segments where the shape of the screws varies from one segment to another, from the point of view of the orientation of the threads and their pitch, the configuration of the threads being arranged so as to carry out operations of transport, mixing, shearing and compressing the mass towards the die and to promote the incorporation of gas so as to obtain good expansion.

6. Device according to claim 5, **characterized in that**, L being the total length of segments of a screw and D the diameter of a screw, the ratio L/D is of the order of approximately 30-60 and that the screws comprise intermediate zones for mixing by monolobe or bilobe discs with a positive orientation having a conveying effect or with a negative orientation having a returning effect or furthermore a segment with a reverse thread inducing a return.

7. Device according to claim 4, **characterized in that** the barrel is provided with cooling means consisting of a double envelope with one self-contained cooling circuit per segment, that the die is optionally provided with cooling means, with valves controlling the flow of cooling agent which permits individual regulation of the temperature of each segment and, optionally, of the die.

8. Device according to claim 4, **characterized in that** air is injected through conduits at different points on the barrel, along 1/2 to 4/5 of its length, preferably on each side thereof.

9. Device according to claim 4, **characterized in that** the die is in the form of a counter-cone, the function of which is to join the spaces surrounding each screw in a single outlet conduit and that the outlet is vertical or horizontal.

10. Device according to claim 9, **characterized in that** the diameter and length of the conduit are designed so as to provide a counter-pressure of 4 to 50 bar, and preferably from 4 to 25 bar and that a device downstream from the conduit regulates the counter-pressure.

## Patentansprüche

1. Verfahren zur Herstellung von belüfteten gefrorenen Produkten, bei dem man eine Eiscrememischung mischt, belüftet, gefriert und auf eine Temperatur von -8°C oder darunter abkühlt und durch eine Düse hindurchtreten läßt, **dadurch gekennzeichnet, daß** alle diese Operationen in einem einzigen Schritt in einer einzigen Vorrichtung durchgeführt werden, die von zwei parallelen, gleichsinnig drehenden und miteinander kämmenden Schnecken gebildet wird, die in einem Gehäuse mit Mitteln für den Lufteinschlag und die Kühlung angeordnet sind.

2. Verfahren nach Anspruch 1, **dadurch gekennzeichnet, daß** man die Eiscrememischung in die Zweischneckenvorrichtung bei etwa 2-5°C eingibt, in der sie von den gemeinsam mit 100-600 U/min rotierenden Schnecken geknetet wird, in eine Luftinjektionszone verlagert wird, wo eine Volumenzunahme von 20-150 % erfolgt, auf -8 bis -20°C stark abgekühlt wird, wonach sie durch eine Düse gedrückt wird.

3. Gefrorenes belüftetes Produkt, das bei der Durchführung des Verfahrens nach Anspruch 1 oder 2 erhalten wurde.

4. Vorrichtung zur Durchführung des Verfahrens nach einem der Ansprüche 1 und 2, die zwei Schnecken enthält, die identisch und parallel sind und miteinander kämmen und sich gleichsinnig drehen, die in einem Gehäuse angeordnet sind, das an einem seiner Enden mit einer Düse versehen ist und am anderen mit einer Einrichtung zum Zugeben einer Eiscremezusammensetzung, und, in einer Zwischenzone, mit einer Einrichtung zur Einspeisung von Luft, wobei das Gehäuse mit einem Mantel versehen ist, in dem Kältemittelfluide zirkulieren.

5. Vorrichtung nach Anspruch 4, **dadurch gekennzeichnet, daß** die beiden Schnecken hintereinander angeordnete Segmente aufweisen, bei denen die Form der Schnecke von einem Segment zum anderen variiert, und zwar hinsichtlich der Orientierung der Gewinde und ihrer Steigung, wobei die Konfiguration der Schnecken so ausgelegt ist, daß die Schritte des Transports, des Mischens, der Scherung und des Komprimierens der Masse in Richtung der Düse bewirkt werden sowie der Lufteinschlag auf eine solche Weise begünstigt wird, daß eine gute Volumenzunahme erhalten wird.

6. Vorrichtung nach Anspruch 5, **dadurch gekennzeichnet, daß**, wenn L die Gesamtlänge der Segmente einer Schnecke ist und D der Durchmesser einer Schnecke, das Verhältnis L/D in der Größenordnung von 30-60 liegt und daß die Schnecken Mischzwischenzonen mit einlappigen oder zweilappigen Scheiben mit positiver Orientierung mit Transporteffekt oder mit negativer Orientierung mit Rückführeffekt oder ein eine Rückführung bewirkendes Segment mit umgekehrter Gewindesteigung aufweisen.

7. Vorrichtung nach Anspruch 4, **dadurch gekennzeichnet, daß** das Gehäuse mit einer Einrichtung zum Kühlen ausgestattet ist, die aus einer Doppelhülle mit einem pro Segment autonomen Kühlkreislauf besteht, daß die Düse gegebenenfalls mit einer Einrichtung zum Kühlen versehen ist, mit Ventilen zur Steuerung der Zufuhr des Kältemittels, die eine individuelle Regelung der Temperatur eines jeden Segments sowie gegebenenfalls der Düse gestatten.

8. Vorrichtung nach Anspruch 4, **dadurch gekennzeichnet, daß** die Luft mit Leitungen auf unterschiedlichen Niveaus des Gehäuses auf 1/2 bis zu 4/5 seiner Länge injiziert wird, vorzugsweise auf jeder Seite des Gehäuses.

9. Vorrichtung nach Anspruch 4, **dadurch gekennzeichnet, daß** die Düse die Form eines umgekehrten Konus aufweist, wobei dessen Rolle darin besteht, die jede Schnecke umgebenden Räume zu einer einzigen Austrittsleitung zu vereinigen, und daß der Austritt vertikal oder horizontal angeordnet ist.

10. Vorrichtung nach Anspruch 9, **dadurch gekennzeichnet, daß** der Durchmesser und die Länge der Leitung so ausgelegt sind, daß sie einen Gegendruck von 4 bis 50 bar gewährleisten, vorzugsweise von 4 bis 25 bar, und daß eine Einrichtung stromab der Leitung den Gegendruck regelt.
